# NEUE EUROPÄISCHE PATENTSCHRIFT

(11) **EP 0 512 269 B2**
(45) Veröffentlichungstag und Bekanntmachung des Hinweises auf die Entscheidung über den Einspruch: **17.09.1997**
(45) Hinweis auf die Patenterteilung: 21.06.1995
(21) Anmeldenummer: 92105987.9
(22) Anmeldetag: 07.04.1992
(51) Int. Cl.: C04B 28/26, C04B 41/50, B05D 1/00, B05D 7/00

(54) **Verfahren und Gemisch zur Herstellung einer grossflächigen Beschichtung**
Process and mixture for preparing large area coating
Procédé et mélange pour la préparation de revêtement sur une grande surface

(30) Priorität: 08.04.1991 DE 4111326
(43) Veröffentlichungstag der Anmeldung: 11.11.1992
(73) Patentinhaber: ECI- European Chemical Industries Ltd., Castleblayney County Monaghan (IE)
(72) Erfinder:
(74) Vertreter: Zenz, Joachim Klaus, Dipl.-Ing.

(56) Entgegenhaltungen:
- SOVIET INVENTIONS ILLUSTRATED week 9150, 5. Februar 1992;& SU - A - 1620438 (KIEV ENG-CONS INST) 15.01.1991
- SPRECHSAAL Band 117, Nr. 2, Februar1984, Seiten 132-134, Coburg, DE; H.-J. PIETRZENIUK: "Verwertung vonRückständen aus Kraftwerken im Bauwesen"
- CHEMICAL ABSTRACTS Band 113, Nr. 18, 29. Oktober 1990, Zusammenfassung Nr. 157505t, Columbus, Ohio, US
- CA: 100:108320 Inorganic Binders JP 58194765 A2
- CA: 102:136749 Binder SU 1130545 A1
- CA: 98:94690 Inorganic composition SU 947129 A1
- CA: 99:163151 Mortar for repairing airfield pavements SU 1033476 A1
- CA: 101:27539 Acid-resistant centrifugally shaped products JP 59030741 A2
- CA: 97:132492 Inorganic foaming compositions JP 57077062 A2
- CA: 83:32253 Inorganic coating composition DE 2344282
- CA: 111:238672 Grout compositions JP 01122952 A2
- CA: 116:240762 Blast-funance slag cement JP 04012043 A2
- CA: 104:212051 Ladle lining JP 60238080 A2
- CA: 105:196326 Inorganic foaming composition for building material JP 611151072 A2
- CA: 92:46453 Building materials PL 100776
- CA: 112:24875 Cementitious products EP 332388 A1
- CA: 114:148891 Inorganic powdered binder raw materials for building materials and ceramics 02221144 A2
- CA: 89:184785 Compositions for flameproof coating base 53064229
- CA: 100:11825 Alkali metal silicates and hardening agents for coating of construction materials 58151357
- Produktebeschreibung inkl. Referenzliste für Konusit KK 10
- Ullmanns Encyklopädie der technischen Chemie Bd 21(1982) S.413-414
- Ullmanns Encyklopädie der technischen Chemie Bd.14 (1977) S.265-266
- Beton in aggressiven Wässern, Taschenbuch für das Bauwesen VEB Verlag für das Bauwesen, 1967, S.104-105
- Betonkorrosion, Betonschutz, Bauverlag GmbH, 1968, S. 504, 505
- Das grosse Baustofflexikon, Deutsche Verlags-Anstalt Stuttgart Berlin 1941, S.784-786, 1006

## Beschreibung

Die Erfindung betrifft Gemische zur Verwendung als selbsterhärtende Beschichtungsmaterialien für mineralische und/oder metallische Untergründe nach den Oberbegriffen der Ansprüche 1 bzw. 2 sowie ein Verfahren zur Beschichtung mineralischer und/oder metallischer Untergründe.

Es sind eine Reihe von Verfahren bekannt, um Untergründe, beispielsweise im Bauwesen, zu beschichten und so die mechanische oder chemische Beständigkeit zu verbessern.

Für die großflächige Beschichtung zur Verbesserung der chemischen Beständigkeit von mineralischen oder metallischen Untergründen werden oft organische Kunststoffe eingesetzt. Diese Beschichtungen können jedoch in der Regel nur auf trockene Untergründe aufgebracht werden. Die Feuerbeständigkeit von Kunststoffbeschichtungen ist im allgemeinen schlecht. Zusätzlich besteht bei einigen dieser Werkstoffe die Gefahr, daß bei der Verbrennung aggressive Medien frei werden. Die Abriebbeständigkeit von Kunststoffbeschichtungen ist kaum größer als die des Untergrundes. Durch Feuchtigkeitsdiffusion können Haftungsprobleme entstehen, und das unterschiedliche Temperaturverhalten von Kunststoffen und mineralischen oder metallischen Untergründen führt oft zu großflächigen Abschälungen oder Rissen.

Mit Beschichtungen oder Überzügen aus zementgebundenen Werkstoffen, ggf. unter Einsatz von Hartkornzuschlägen, können zwar wesentliche Verbesserungen der Abriebbeständigkeit der Untergründe erreicht werden; diese Überzüge sind jedoch in der Regel nicht chemisch beständig, z.B. nicht gegen Säuren. Die Beschichtungen sind außerdem zu schwer.

Besonders für die Verwendung auf mineralischen Untergründen sind seit langem Wasserglaskitte und -mörtel bekannt, die sich durch ihre hohe Säurefestigkeit auszeichnen. Gegen Wasser und Alkali sind diese Wasserglaskitte jedoch wenig beständig. Sie haben weiter den Nachteil, daß sie zur Rißbildung neigen. Zur großflächigen Beschichtung waren diese bekannten Materialien daher weniger gut geeignet.

Es fehlt bisher an einem verfahren zum großflächigen Oberflächenschutz mineralischer oder metallischer Untergründe im Bauwesen, welches die geforderten Eigenschaften gleichzeitig besitzt und mit einer guten Verarbeitungsfähigkeit verbindet. Hier schafft die Erfindung Abhilfe.

Aufgabe der Erfindung ist es, ein Gemisch und ein Verfahren für die großflächige Beschichtung von Untergründen insbesondere für Bauzwecke zur Verfügung zu stellen, welche die Vorteile ausgezeichneter chemischer Beständigkeit in saurem und alkalischem Milieu und überlegener mechanischer Eigenschaften sowie Feuerbeständigkeit der fertigen Beschichtung vereinigen.

Zur Lösung dieser Aufgabe sieht die Erfindung ein Gemisch mit den Merkmalen des Anspruchs 1 bzw. ein Gemisch mit den Merkmalen des Anspruchs 2 vor. Das Gemisch besteht aus einer wäßrigen alkalischen Silikatlösung, einer Pulverkomponente und wenigstens einem Zusatz. Die Pulverkomponente besteht aus einer Abmischung von Elektrofilterasche mit pyrogener oder gefällter Kieselsäure oder Mikrosilica oder einer Abmischung aus Traß oder gebranntem Ölschiefer mit pyrogener oder gefällter Kieselsäure. Überraschenderweise härtet dieses erfindungsgemäße System selbständig, d.h. ohne Wärmezufuhr oder Beteiligung eines anorganischen oder organischen Härters aus. Das Aushärten findet bei einer Temperatur ab etwa 5°C statt.

Zum Beschichten mineralischer und/oder metallischer Untergründe wird das erfindungsgemäße Gemisch großflächig auf den Untergrund aufgebracht. Ein besonderer Vorteil der Erfindung liegt darin, das erfindungsgemäße Gemisch nicht auf eine bestimmte Schichtstärke beschränkt ist.

Das Gemisch enthält erfindungsgemäß eine alkalische Silikatlösung, wobei ein Gewichtsanteil von 5 bis 35%, bei gegenwärtigen Ausführungsbeispielen von 10 bis 15%, bezogen auf den Gesamtfeststoffgehalt bevorzugt wird. Als besonders geeignet hat sich eine kalialkalische Silikatlösung mit einem Molverhältnis SiO₂:K₂O kleiner 1,5 erwiesen.

Das erfindungsgemäße Gemisch enthält zwei unterschiedliche Stoffe, die beide latenthydraulische oder puzzolanische Eigenschaften haben.

(Unter einem latenthydraulischen oder puzzolanischen Material wird ein Stoff verstanden, der einen Anreger braucht, um in technisch nutzbarer Zeit hydraulisch erhärten zu können.) Es können Elektrofilterasche bzw. Flugasche, Traß, gebrannter Ölschiefer, pyrogene oder gefällte Kieselsäure und Mikrosilica oder Kombinationen der vorgenannten Stoffe oder ähnlicher latenthydraulischer oder puzzolanischer Stoffe verwendet werden.

Die Zusätze umfassen die üblichen inerten Zuschlagstoffe, bzw. Magerungsmittel oder Füllstoffe, Armierungsmittel, abbindebeschleunigende Stoffe, sowie Feuchtigkeitsregulatoren. Durch Variation der Gemischanteile, insbesondere der abbindebeschleunigenden Stoffe, lassen sich die Abbindeeigenschaften und damit auch die mechanischen Eigenschaften der fertigen Schicht einstellen.

Als Zuschlagstoffe können beispielsweise Quarzkörnungen, vorzugsweise bis 1mm Korngröße oder gebrochene Natursteine, wie Granit oder Basalt, in einem Anteil von vorzugsweise bis zu 99 Gew.-% bezogen auf den Gesamtfeststoffgehalt eingesetzt werden. Mittels hochtemperaturbeständiger Mineralien, z.B. Bauxit, Diasporit, Korund, Schwerspat, Ferrosilizium oder Erzen sowie weiterer Zuschläge, z.B. Perlite o.ä. Zuschlagstoffen, kann die Temperaturbeständigkeit des ausgehärteten Beschichtungsmaterials auf bis zu 1700° C erhöht werden.

Die mechanische Beständigkeit und Festigkeit kann zusätzlich gesteigert werden, wenn in Weiterbildung der Erfindung Armierungen aus Metall, Kunststoff, Mineral, Glas oder einer Mischung dieser Stoffe zugegeben werden. Geeignet sind hierbei Stahlfasern, Mineralfasern, Glasfasern und Kunststoffasern, wie z.B. Polyacrylnitril- und Polypropylenfasern. Auch üblicher Baustahl kann eingesetzt werden. Derzeit bevorzugt wird der Einsatz von Glasfasern in einem Anteil von 0,01 bis 5 Gew.-% bezogen auf den Gesamtfeststoffgehalt.

In bevorzugter Weiterbildung der Erfindung enthält das Gemisch gemahlene Hochofenschlacke mit einem Glasanteil größer 90% in einem Gewichtsanteil von 0,1 bis 12, vorzugsweise 1 bis 2% bezogen auf den Gesamtfestoffanteil. Besonders gute Verarbeitungseigenschaften konnten bei Zusatz von hydrophilen Stoffen festgestellt werden, die die Wasserrückhaltung des Gemischs verbesserten, z.B. von bis zu 8 Gew.-% eines Alkohols und/oder eines niedermolekularen Amins. Der Alkohol kann ein- oder mehrwertig, vorzugsweise zweiwertig sein. Derzeitig bevorzugt sind 1 bis 2 Gew.-% eines Glykols, beispielsweise Neopentylglykol. Der Alkohol kann ganz oder teilweise durch ein Amin, vorzugsweise ein Alkanolamin, z.B. Triäthanolamin, ersetzt werden.

Durch das erfindungsgemäße Verfahren und das dabei verwendete Gemisch werden eine ausgezeichnete Säure-, Wasser- und Alkalibeständigkeit, eine ausgezeichnete Feuerbeständigkeit und ein ausgezeichnetes Kriechvermögen als Voraussetzung für ein rißfreies Aushärten erreicht. Das Beschichtungsmaterial zeichnet sich durch hohe Frühfestigkeit, hohe Endfestigkeit und eine hohe Beständigkeit gegen aggressive Medien aus. Die behandelten Oberflächen halten einer wesentlich höheren Abriebbelastung stand als herkömmliche Kunststoffbeschichtungen. Auch feuchte Untergründe können behandelt werden, wobei eine gute Haftung erzielt wird. Die alkalisch wirkende Beschichtung bildet einen guten Korrosionsschutz, z.B. für Stahl.

Das Gemisch kann nach dem erfindungsgemäßen Verfahren gleichermaßen gut im Streichverfahren, Rollverfahren, Spritzverfahren, Schlämmvenfahren und Spachtelverfahren auf mineralischen und metallischen Untergründen aufgebracht werden.

Überraschenderweise wurde gefunden, daß das durch die Erfindung zur Verfügung gestellte Beschichtungsmaterial eine deutlich geringere Schwindrißneigung als bisher bekannte Materialien auf Silikatbasis hat. Da bei ungesteuerten Systemen die Austrocknung schneller erfolgt als das Abbinden bzw. Erhärten, neigen herkömmliche Materialien zu einem größeren Schwiden und demzufolge hoher Rißanfälligkeit. Durch Beschleunigung Des Abbindevorgangs wird diesem Effekt entgegengewirkt.

Das ausgehärtete Beschichtungsmaterial besitzt hohe mechanische Festigkeiten, eine hohe Abriebbeständigkeit und eine hohe Beständigkeit im sauren und alkalischen Bereich. Bei einer erfindungsgemäßen Beschichtung wurde z.B. eine Temperaturbeständigkeit bis etwa 1.700°C bei einem a T 23/80 = 21,9 x 10⁻⁶ K⁻¹ mit einer bleibenden Dehnung von 0,17mm/m festgestellt.

Das erfindungsgemäße Gemisch läßt sich hervorragend von Hand sowie im Dichtstromspritzverfahren mit allen gängigen Schnecken- und Mehrkolbenmaschinen verarbeiten.

### Beispiele

### Beispiel 1:

30% Elektrofilterasche (Efa-Füller)
5% Mikrosilica
1% Neopentylglykol
64% Quarzsand 0 bis 1 mm
100 Gewichtsprozent Gesamtfeststoffanteil
   werden vermengt mit
10 bis 15 Gew.-% kalialkalischer Kalisilikatlösung mit einem Molverhältnis SiO₂:K₂O kleiner 1,5.

Zur Variation der Materialeigenschaften können die Gewichtsanteile an Elektrofilterasche und Mikrosilica verändert werden.

Besonders vorteilhafte Eigenschaften konnten erhalten werden, wenn zwischen 5 und 85 Gew.-%, insbesondere zwischen 10 und 50 Gew.-% Efa und zwischen 0,1 und 20 Gew.-%, insbesondere zwischen 1 und 15 Gew.-% Mikrosilica eingesetzt wurden.

Der Anteil an Zuschlagstoffen kann sich dabei zwischen 22 und 80 Gew.-% bewegen, jeweils bezogen auf den Gesamtfeststoffgehalt.

### Beispiel 2:

60% Elektrofilterasche (Efa Füller)
1% Mikrosilica
0,5% Neopentylglykol
38,5 % Quarzsand
100 Gew.-% Gesamtfeststoffanteil
   werden vermengt mit
20 % kalialkalischer Silikatlösung.

### Beispiel 3:

30% Elektrofilterasche (Efa-Füller)
5% Mikrosilica
1% Triäthanolamin
64% Quarzsand 0 bis 1 mm
100 Gew.-%
   werden vermengt mit
10 bis 15 Gew.-% kalialkalischer Kalisilikatlösung.

### Beispiel 4:

60% Elektrofilterasche (Efa Füller)
1% Mikrosilica
0,5% Triäthanolamin
38,5 % Quarzsand
100 Gew.-% Gesamtfeststoffanteil
   werden vermengt mit
20 % kalialkalischer Silikatlösung.

### Beispiel 5:

Das Gemisch kann zusätzliche Armierungen enthalten.
30% Elektrofilterasche (Efa-Füller)
5% Mikrosilica
1% Neopentylglykol
0,01 - 5% Glasfasern
63,99 - 59% Quarzsand 0 bis 1 mm
100 Gew.-%
   werden vermengt mit
10 bis 15 Gew.-% alkalischer Silikatlösung.

### Beispiel 6:

Das folgende Gemisch ist besonders geeignet für solche Beschichtungen, die über weite pH-Bereiche sowohl im Sauren als auch im Alkalischen beständig sein sollen.
30 % Elektrofilterasche
5 % Mikrosilica
1 % Neopentylglykol
0,1% Glasfasern
2 % Hüttensand
61,9% Quarzsand 0 bis 1mm
100 Gew.-%
   werden vermengt mit
10 bis 15 Gew.-% alkalischer Silikatlösung.

### Beispiel 7:

Für den Einsatz im Hochtemperaturbereich kann das Gemisch temperaturbeständige Mineralien, Erze oder Gesteine enthalten.
30 % Elektrofilterasche
5 % Mikrosilica
1 % Neopentylglykol
0,1% Glasfasern
2 % Hüttensand
61,9% Diasporit 0 bis 4mm
100 Gew.-% zu vermengen mit
10 bis 15 Gew.-% alkalischer Silikatlösung.

## Patentansprüche

1. Gemisch aus einer alkalischen Silikatlösung, wenigstens einer Pulverkomponente und wenigstens einem Zusatz,
wobei die Pulverkomponente eine Abmischung aus wenigstens zwei puzzolanen bzw. latenthydraulischen Stoffen enthält,
**dadurch gekennzeichnet**,
daß die Pulverkomponente eine Abmischung aus wenigstens einem Stoff aus einer Elektrofilter- und Flugasche enthaltenden ersten Stoffgruppe und wenigstens einem Stoff aus einer pyrogene Kieselsäure, gefällte Kieselsäure und Mikrosilica enthaltenden zweiten Stoffgruppe aufweist, und
daß das Gemisch als selbsterhärtendes Beschichtungsmaterial für mineralische und/oder metallische Untergründe vorgesehen ist.

2. Gemisch aus einer alkalischen Silikatlösung, wenigstens einer Pulverkomponente und wenigstens einem Zusatz,
wobei die Pulverkomponente eine Abmischung aus wenigstens zwei puzzolanen bzw. latenthydraulischen Stoffen enthält,
**dadurch gekennzeichnet**,
daß die Pulverkomponente eine Abmischung aus wenigstens einem Stoff aus einer Traß und gebrannten Ölschiefer enthaltenden ersten Stoffgruppe und wenigstens einem Stoff aus einer pyrogene Kieselsäure und gefällte Kieselsäure enthaltenden zweiten Stoffgruppe aufweist, und
daß das Gemisch als selbsterhärtendes Beschichtungsmaterial für mineralische und/oder metallische Untergründe vorgesehen ist.

3. Gemisch nach Anspruch 1 oder 2, dadurch gekennzeichnet, daß die alkalische Silikatlösung eine kalialkalische Silikatlösung ist, die in einem Anteil von 5 bis 35 Gew.-%, vorzugsweise von 10 bis 15 Gew.-%, bezogen auf den Gesamtfeststoffanteil enthalten ist.

4. Gemisch nach Anspruch 3, dadurch gekennzeichnet, daß die kalialkalische Silikatlösung einen Feststoffgehalt von 25 bis 65 Gew.-%, vorzugsweise mit einem Molverhältnis von SiO₂ : K₂O von 0,8 bis 2,3, insbesondere kleiner als 1,5 hat.

5. Gemisch nach einem der Ansprüche 1 bis 4, dadurch gekennzeichnet, die Pulverkomponente aus einer Abmischung aus Flugasche und Microsilica besteht, vorzugsweise 5 bis 85 Gew.-% Elektrofilterasche und 1 bis 15 Gew.-% Microsilica, jeweils bezogen auf den Gesamtfeststoffgehalt.

6. Gemisch nach einem der Ansprüche 1 bis 5, dadurch gekennzeichnet, daß das latenthydraulische Material wenigstens einen reaktiven Zusatz enthält, der das bei der Erhärtung entstehende SiO₂-Gitter gegenüber neutralen und alkalischen Medien stabilisiert.

7. Gemisch nach Anspruch 6, dadurch gekennzeichnet, daß der reaktive Zusatz gemahlene Hochofenschlacke, vorzugsweise mit einem Glasanteil größer 90%. enthält.

8. Gemisch nach Anspruch 6 oder 7, dadurch gekennzeichnet, daß die Zusätze Zuschlagstoffe in Form von Quarzkörnungen und/oder gebrochenen Natursteinen, einschließlich Granit und Basalt (inerte Zuschlagstoffe) und/oder hochtemperaturbeständigen Mineralien, vorzugsweise aus der Gruppe Bauxit, Diasporit, Korund, Schwerspat, Ferrosilizium, Erze, enthalten.

9. Gemisch nach einem der Ansprüche 1 bis 8, dadurch ge8kennzeichnet, daß das Gemisch abbindebeschleunigende Stoffe, z.B. latenthydraulische Stoffe und/oder abbindebeschleunigende Zuschlagstoffe in einem Anteil von 0,1 bis 12 Gew.-%, vorzugsweise von 1 bis 2 Gew.-%, bezogen auf den Gesamtfeststoffgehalt enthält.

10. Gemisch nach einem der Ansprüche 1 bis 9, dadurch gekennzeichnet, daß das Gemisch als Zusatz von Armierungsmittel aus Metall, Kunststoff, vorzugsweise Polyacrylnitril oder Polypropylen, Mineralien, Glas oder einer Mischung dieser Stoffe, vorzugsweise in Faserform, enthält.

11. Gemisch nach Anspruch 10, dadurch gekennzeichnet, daß als Armierungsmittel Glasfasern in einem Anteil von 0,01 bis 5 Gew.-% bezogen auf den Gesamtfeststoffgehalt enthalten sind.

12. Gemisch nach einem der Ansprüche 1 bis 11, dadurch gekennzeichnet, daß die Zusätze wasserrückhaltend wirkende organisch-chemische Stoffe enthalten, vorzugsweise Alkohole und/oder Amine.

13. Gemisch nach Anspruch 12, dadurch gekennzeichnet, daß als Alkohol ein mehrwertiger, vorzugsweise ein zweiwertiger Alkohol in einem Anteil von 0,1 bis 8 Gew.-%, vorzugsweise 1 Gew.-%, bezogen auf den Gesamtfeststoffgehalt und/oder als Amin ein niedermolekulares Amin, vorzugsweise ein Alkanolamin, in einem Anteil von 0,1 bis 8 Gew.-%, vorzugsweise 1 Gew.-%, bezogen auf den Gesamtfeststoffgehalt enthalten sind/ist.

14. Verfahren zur Beschichtung mineralischer und/oder metallischer Untergründe, dadurch gekennzeichnet, daß ein Gemisch nach einem der Ansprüche 1 bis 13 großflächig auf den Untergrund aufgebracht wird.

15. Verfahren nach Anspruch 14, dadurch gekennzeichnet, daß die Abbindeeigenschaften des Gemisches durch Variation der Gemischanteile, insbesondere der abbindebeschleunigenden Stoffe eingestellt werden.

16. Verfahren nach Anspruch 14 oder 15, dadurch gekennzeichnet, daß das Gemisch durch Aufstreichen, Aufrollen, Aufspritzen, Schlämmen oder Spachteln auf den Untergrund aufgebracht wird.

17. Verfahren nach Anspruch 14 oder 16, dadurch gekennzeichnet, daß das Gemisch von Hand oder im Dichtstromspritzverfahren mit Hilfe von Schnecken- oder Mehrkolbenmaschinen aufgebracht wird.

## Claims

1. Mixture of an alkaline silicate solution, at least one pulverulent component and at least one additive, wherein the pulverulent component contains a mixture of at least two pozzuolanic or latent hydraulic materials, characterized in that the pulverulent component comprises a mixture of at least one material from a first group of materials comprising electro-filter ash and fly ash, and at least one material from a second group of materials comprising pyrogenic silicic acid, precipitated silicic acid, and microsilica, and that the mixture is to be used as a self-setting coating material for mineral and/or metallic substrates.

2. Mixture of an alkaline silicate solution, at least one pulverulent component and at least one additive, wherein the pulverulent component comprises a mixture of at least two pozzuolanic or latent hydraulic materials, characterized in that the pulverulent component comprises a mixture of at least one material from a first group of materials comprising trass and burnt oil shale, and at least one material from a second group of materials comprising pyrogenic silicic acid and precipitated silicic acid, and that the mixture is to be used as a self-setting coating material for mineral and/or metallic substrates.

3. Mixture as claimed in Claim 1 or 2, characterised in that the alkaline silicate solution is an potash alkaline silicate solution which is included in an amount of 5 to 35 wt.%, preferably 10 to 15 wt.%, with respect to the total solids content.

4. Mixture as claimed in Claim 3, characterised in that the potash alkaline silicate solution has a solids content of 25 to 65 wt.%, preferably with a molar ratio of SiO₂:K₂O of 0.8 to 2.3, particularly smaller than 1.5.

5. Mixture as claimed in one of Claims 1 to 4, characterised in that the pulverulent component comprises a mixture of fly ash and microsilica, preferably 5 to 85 wt.% electro-filter ash and 1 to 15 wt.% microsilica, with respect in each case to the total solids content.

6. Mixture as claimed in one of Claims 1 to 5, characterised in that the latent hydraulic material contains at least one reactive additive which stabilises the SiO₂ lattice, which forms during the setting, with respect to neutral and alkaline media.

7. Mixture as claimed in Claim 6, characterised in that the reactive additive is ground blast furnace slag, preferably with a glass content greater than 90%.

8. Mixture as claimed in Claim 6 or 7, characterised in that the additives include aggregates in the form of granular quartz and/or broken natural rocks, including granite and basalt (inert aggregates) and/or high temperature-resistant minerals, preferably from the group bauxite, diasporite, corundum, barytes, ferrosilicon and ores.

9. Mixture as claimed in one of Claims 1 to 8, characterised in that the mixture contains setting-accelerating materials, e.g. latent hydraulic materials and/or setting-accelerating aggregates in an amount of 0.1 to 12 wt.%, preferably of 1 to 2 wt.%, with respect to the total solids content.

10. Mixture as claimed in one of Claims 1 to 9, characterised in that the mixture contains reinforcement as an additive comprising metal, plastics material, preferably polyacrylonitrile or polypropylene, minerals, glass or a mixture of these materials, preferably in fibre form.

11. Mixture as claimed in Claim 10, characterised in that glass fibres are included as the reinforcement in an amount of 0.01 to 5 wt.% with respect to the total solids content.

12. Mixture as claimed in one of Claims 1 to 11, characterised in that the additives includes water-retaining organic chemical substances, preferably alcohols and/or amines.

13. Mixture as claimed in Claim 12, characterised in that a polyhydric, preferably dihydric, alcohol in an amount of 0.1 to 8 wt.%, preferably 1 wt.%, with respect to the total solids content is included as the alcohol and/or a low molecular amine, preferably an alkanol amine, in an amount from 0.1 to 8 wt.%, preferably 1 wt.%, with respect to the total solids content, is included as the amine.

14. Method of coating mineral and/or metallic substrates, characterised in that a mixture as claimed in one of Claims 1 to 13 is applied over a large area to the substrate.

15. Method as claimed in Claim 14, characterised in that the setting characteristics of the mixture are adjusted by varying the proportions of the mixture, particularly of the setting-accelerating materials.

16. Method as claimed in Claim 14 or 15, characterised in that the mixture is applied to the substrate by painting, rolling, spraying, washing or trowelling.

17. Method as claimed in Claim 14 or 16, characterised in that the mixture is applied manually or by a compact jet spraying method with the aid of screw or multipiston machines.

## Revendications

1. Mélange composé d'une solution de silicate alcaline, d'au moins un composant pulvérulent et d'au moins un additif,le composant pulvérulent étant composé d'un mélange d'au moins deux substances pouzzolaniques ou à latence hydrauliquescaractérisé en ce quele composant pulvérulent contient un mélange d'au moins une substance d'une première groupe de substances étant composé de cendres venant d'électrofiltres et de cendres volantes, et d'au moins une substance d'une deuxième groupe de substances étant composé d'acide silicique pyrogène, d'acide silicique précipité et de microsilicate, et en ce que le mélange est prévu comme materiau de revêtement auto-durcissant de sous-couches minérales et/ou métalliques.

2. Mélange composé d'une solution de silicate alcaline, d'au moins un composant pulvérulent et d'au moins un additif, le composant pulvérulent étant composé d'un mélange d'au moins deux substances pouzzolaniques ou à latence hydrauliques caractérisé en ce que le composant pulvérulent contient un mélange d'au moins une substance d'une première groupe de substances étant composé de trass et de schiste huileux calciné, et d'au moins une substance d'une deuxième groupe de substances étant composé d'acide silicique pyrogène et d'acide silicique précipité, et en ce que le mélange est prévu comme materiau de revêtement auto-durcissant de sous-couches minérales et/ou métalliques.

3. Mélange selon la revendication 1 ou 2, caractérisé en ce que la solution de silicate alcaline est une solution de silicate à alcalinité potassium, contenue en une proportion de 5 à 35% en poids, de préférence de 10 à 15% en poids, par rapport à la proportion totale en solides.

4. Mélange selon la revendication 3, caractérisé en ce que la solution de silicate à alcalinité potassium à une teneur en solide de 25 à 65% en poids, de préférence avec un rapport molaire SiO₂ : K₂O de 0,8 à 2,3, en particulier inférieur à 1,5.

5. Mélange selon l'une des revendications 1 à 4, caractérisé en ce que le composant pulvérulent est composé d'un mélange de cendres volantes et de micro-silice, de préférence avec de 5 à 85% en poids de cendres d'électrofiltre et de 1 à 15% en poids de micro-silice, chaque fois rapporté à la teneur totale en solides.

6. Mélange selon l'une des revendications 1 à 5, caractérisé en ce que matériau à latence hydraulique contient au moins un additif réactif qui stabilise le réseau SiO₂ produit lors du durcissement vis-à-vis de fluides neutres et alcalins.

7. Mélange selon la revendication 6, caractérisé en ce que l'additif réactif contient des scories de haut fourneau moulues, de préférence avec une teneur en verre supérieure à 90%.

8. Mélange selon la revendication 6 ou 7, caractérisé en ce que les additifs contiennent des produits d'addition se présentant sous la forme de grains de quartz et/ou de pierres naturelles broyées, y compris du granit et du basalte (additifs inertes) et/ou des minéraux résistant à des températures élevées, de préférence issus du groupe de la bauxite, de la diasporite, du corindon, de la barytine, du ferrosilicium, de minerais.

9. Mélange selon l'une des revendications 1 à 8, caractérisé en ce que mélange contient des substances accélérant la prise, par exemple des substances à latence hydraulique et/ou des additifs accélérant la prise, en une proportion de 0.1 à 12 % en poids, de préférence de 1 à 2% en poids par rapport à la teneur totale en solides.

10. Mélange selon l'une des revendications 1 à 9, caractérisé en ce que le mélange contient, à titre d'additif de produit d'armature, en métal, de la matière plastique, de préférence du polyacrylnitrile ou du propylène, des minéraux, du verre ou contient un mélange de ces substances, de préférence sous forme fibreuse.

11. Mélange selon la revendication 10, caractérisé en ce que des fibres de verre utilisées comme produit d'armature sont contenues en une proportion de 0.01 à 5% en poids par rapport à la teneur totale en solides.

12. Mélange selon l'une des revendications 1 à 11, caractérisé en ce que les additifs contiennent des substances organochimiques ayant un effet de rétention de l'eau, de préférence des alcools et/ou des amines.

13. Mélange selon la revendication 12, caractérisé en ce que sont contenus, comme alcools, un alcool polyvalent, de préférence un alcool bivalent en une proportion de 0,1 à 8% en poids, de préférence de 1% en poids, par rapport à la teneur totale en solides et/ou, comme amine, une amine à faible poids moléculaire, de préférence une alcanolamine, en une proportion en poids de 0,1 à 8%, de préférence de 1% en poids, par rapport à la teneur totale en solides.

14. Procédé de revêtement de sous-couches minérales et/ou métalliques, caractérisé en ce qu'un mélange, selon l'une des revendications 1 à 3, est appliqué sur une grande surface sur la sous-couche.

15. Procédé selon la revendication 14, caractérisé en ce que les propriétés de prise du mélange sont réglées par variation des proportions du mélange, en particulier des substances accélérant la prise.

16. Procédé selon la revendication 14 ou 15, caractérisé en ce que le mélange est appliqué par enduction, application au rouleau, pulvérisation, lavage ou spatulage-masticage sur la sous-couche.

17. Procédé selon la revendication 14 ou 16, caractérisé en ce que le mélange est appliqué à la main ou bien suivant un procédé d'injection à courant dense à l'aide de machines à vis ou à plusieurs pistons.
